# FASCICULE DE BREVET EUROPEEN

(11) **EP 2 489 536 B1**
(45) Date de publication et mention de la délivrance du brevet: **18.09.2013**
(21) Numéro de dépôt: 12154502.4
(22) Date de dépôt: 08.02.2012
(51) Int. Cl.: B60J 5/04

(54) **Système d'ouvrant pour un engin à moteur, en particulier pour un véhicule automobile.**
Öffnungsflügelsystem für eine Motormaschine, inbesondere für Kraftfahrzeug.
Door system for a motor vehicle, in particular for an automobile.

(30) Priorité: 17.02.2011 FR 1100483
(43) Date de publication de la demande: 22.08.2012
(73) Titulaire: Hutchinson, 75008 Paris (FR)
(72) Inventeur: Coldre, Laurent, 45390 LA NEUVILLE SUR ESSONNE (FR); Florentz, Bertrand, 45200 PAUCOURT (FR)
(74) Mandataire: Bolinches, Michel Jean-Marie

(56) Documents cités:
- FR-A1- 2 945 241
- JP-A- 59 202 932
- US-A- 4 684 167
- US-A1- 2007 283 535

## Description

L'invention concerne un système d'ouvrant pour un engin à moteur, en particulier pour un véhicule automobile, sachant que ce système pourrait être aussi bien utilisé dans le domaine aéronautique, ferroviaire ou naval par exemple. Un tel système est connu du US 2007/283535.

Dans le domaine automobile, le terme ouvrant désigne un panneau de carrosserie mobile, vitrée ou non, qui permet un accès à l'intérieur de l'habitacle, au compartiment moteur ou au coffre du véhicule.

D'une manière générale, il existe plusieurs familles d'ouvrants, à savoir :
- les ouvrants de type "battant" qui sont les plus utilisés dans l'industrie automobile, un côté de ces ouvrants pivotant autour d'un axe sensiblement horizontal ou vertical entre une position fermée et une position ouverte ;
- les ouvrants de type "coulissant" qui coulissent dans un plan sensiblement vertical entre une position fermée et une position ouverte ;
- les ouvrants de type "élytre" qui pivotent dans un plan sensiblement vertical autour d'un axe sensiblement horizontal plus ou moins perpendiculaire au plan des ouvrants entre une position fermée et une position ouverte ; et
- les ouvrants de type "papillon" qui pivotent autour d'un axe sensiblement horizontal entre une position fermée et une position ouverte.

Chacun de ces types d'ouvrants présente certes des avantages, en particulier un design original et une cinématique de manoeuvre esthétiquement attirante pour les ouvrants de type "papillon" et de type "élytre", mais également des inconvénients, en particulier dans le cas de l'ouverture d'une porte dans un garage ou dans un parking pour tous les ouvrants qui pivotent, cet inconvénient pouvant être minimisé dans le cas de véhicules de faible hauteur ou d'ouvrants de surface réduite mais qui restreignent l'accès à l'intérieur des véhicules.

Un but de l'invention est de concevoir un nouveau type d'ouvrant qui peut être qualifié de type "coulisso-battant", et qui allie notamment une simplicité d'utilisation et un encombrement réduit lors des phases de manoeuvre, tout en apportant une dimension esthétique nouvelle.

A cet effet, l'invention propose un système d'ouvrant pour un engin à moteur, en particulier pour un véhicule automobile par exemple, l'ouvrant étant monté articulé autour d'un axe de rotation principal fixe, sensiblement horizontal et supporté par le châssis de l'engin à moteur, et étant déplaçable autour de l'axe de rotation principal manuellement ou automatiquement entre une position fermée et une position ouverte par des moyens de commande que comprend ce système, qui est **caractérisé en ce que**, au cours d'une phase de déplacement de l'ouvrant, les moyens de commande en rotation de l'ouvrant autour de l'axe de rotation principal actionnent des moyens de manoeuvre en rotation en sens inverse de l'ouvrant autour d'un axe de rotation secondaire, ces moyens de manoeuvre étant également inclus dans ce système, la combinaison de ces deux déplacements en rotation entraînant un déplacement de l'ouvrant dans un plan sensiblement vertical sans occasionner un débattement latéral de l'ouvrant pendant cette phase de déplacement de l'ouvrant.

Avantageusement, les moyens de manoeuvre de l'ouvrant peuvent comprendre une tringlerie articulée dont la géométrie se déforme pendant la phase de déplacement de l'ouvrant dans un plan sensiblement vertical, et dont la géométrie reste fixe pendant le reste du déplacement de l'ouvrant en interdisant la rotation de l'ouvrant autour de l'axe de rotation secondaire.

D'une manière générale, la tringlerie articulée peut être constituée de deux pièces formant entre elles un angle α qui est variable pendant la phase de déplacement de l'ouvrant dans un plan sensiblement vertical et qui est fixe pendant le reste du déplacement de l'ouvrant.

La première pièce de la tringlerie articulée peut être montée en rotation autour de l'axe de rotation principal supporté par le châssis du véhicule et autour de l'axe de rotation secondaire supporté par l'ouvrant, et les moyens de commande en rotation qui comprennent au moins un vérin peuvent être montés articulés autour d'un autre axe de rotation supporté par le châssis du véhicule et autour d'un axe de rotation qui est supporté par la première pièce de la tringlerie et qui est situé entre les axes de rotation principal et secondaire pour permettre le déplacement en rotation de l'ouvrant.

Selon un premier mode de réalisation de l'invention, la tringlerie articulée comprend au moins une pièce dont la longueur varie au cours de la phase de déplacement de l'ouvrant dans un plan sensiblement vertical, et les deux pièces de cette tringlerie sont alors avantageusement constituées de deux biellettes.

Dans un premier exemple de ce premier mode, la seconde pièce de la tringlerie articulée est constituée par un moyen dit équilibreur à longueur variable qui est monté articulé entre un axe de rotation supporté par l'ouvrant et ledit axe de rotation supporté par la première pièce de la tringlerie.

Dans un second exemple de réalisation de ce premier mode, la seconde pièce de la tringlerie articulée est constituée par un coulisseau qui est mobile dans une rainure de la première pièce de la tringlerie pour faire varier la longueur de ce coulisseau et donc la position d'un axe de rotation supporté par l'ouvrant, sur lequel axe le coulisseau est monté articulé.

Selon un second mode de réalisation de l'invention, la première pièce de la tringlerie articulée peut comporter un élément conçu pour venir buter, lors de la rotation de cette première pièce autour de l'axe de rotation secondaire, contre une butée angulaire qui est solidaire de l'ouvrant et forme la seconde pièce de cette tringlerie. Cette butée angulaire peut avantageusement être montée fixe par rapport à l'ouvrant et de manière immédiatement adjacente à l'axe de rotation secondaire.

Conformément à ce second mode, ce système d'ouvrant peut avantageusement comprendre, outre les moyens de commande et de manoeuvre, des moyens d'amortissement de la rotation de la première pièce autour de l'axe de rotation secondaire, ces moyens d'amortissement, tels qu'un amortisseur à vérin hydraulique, étant montés solidaires de cette première pièce et coopérant avec l'ouvrant lors de son ouverture.

D'une manière générale, ledit vérin constituant les moyens de commande en rotation de l'ouvrant peut avantageusement être commandé d'une manière automatique par une télécommande à distance par exemple pour entraîner la rotation de l'ouvrant autour de l'axe de rotation principal, ou bien l'axe de rotation principal peut être commandé en rotation par un groupe moteur pour entraîner la rotation de l'ouvrant autour de l'axe de rotation principal et pour entraîner l'actionnement du vérin associé aux moyens de commande en rotation.

Le système selon l'invention peut comprendre également un dispositif de verrouillage/déverrouillage qui est utilisé pour dégager l'ouvrant de ses appuis sur la caisse du véhicule au début de son mouvement d'ouverture (i.e. avant qu'il n'entame son mouvement dans le sens de l'ouverture), ce dispositif comprenant par exemple une roulette escamotable qui coopère avec une rampe sensiblement verticale formant un rail de guidage fixe sur lequel elle roule, et qui reste en appui sur cette rampe pendant le déplacement de l'ouvrant dans un plan sensiblement vertical.

D'une manière générale, dans un engin à moteur type véhicule automobile équipé de quatre portes battantes par exemple, il est nécessaire d'avoir un montant intermédiaire ou "pied milieu" qui a notamment pour fonction de supporter une partie des systèmes d'ouverture et de fermeture des quatre battants. Par ailleurs, ces systèmes d'ouverture et de fermeture sont cachés par les battants, ce qui impose que le pied milieu se trouve en retrait par rapport au volume général du véhicule.

Dans le système d'ouvrant selon l'invention, on ne conserve que la partie basse du pied milieu qui va constituer la rampe de guidage ou de roulement pour la roulette du dispositif de verrouillage/déverrouillage. Cette rampe ou rail de guidage peut ainsi avantageusement former un pied milieu limité à la hauteur du rail.

Avantageusement, les moyens de commande de l'ouvrant peuvent être situés au niveau du cadre supérieur de l'ouvrant et être déportés sur le pavillon de toit du véhicule, ce qui a pour conséquence de pouvoir extérioriser le pied milieu et d'augmenter ainsi l'habilité intérieure du véhicule sans en modifier le volume extérieur (le rail de guidage étant ainsi extériorisé par rapport à la caisse du véhicule).

Enfin, on peut également prévoir dans le système d'ouvrant des moyens de sécurité pour éviter tout accident involontaire qui pourrait être occasionné aux passagers du véhicule lors de l'ouverture ou la fermeture de l'ouvrant.

Bien entendu, l'invention concerne également un engin à moteur équipé d'au moins un ouvrant qui est actionné dans le sens de l'ouverture ou de la fermeture par un système tel que défini précédemment.

Selon un avantage important de l'invention qui est commun aux deux modes précités de l'invention, le débattement latéral de l'ouvrant produit au cours de son ouverture est réduit par rapport à un ouvrant de type basculant pivotant uniquement autour d'un axe de rotation principal, ce qui est notamment utile pour obtenir un gain de place lorsque le véhicule se trouve sur une place de parking par exemple. Par ailleurs, ce gain de place est obtenu sans forcément augmenter la hauteur de seuil de l'ouvrant, c'est-à-dire la hauteur qui le sépare du sol.

D'autres avantages, caractéristiques et détails de l'invention ressortiront du complément de description qui va suivre en référence à des dessins annexés, donnés uniquement à titre d'exemple et dans lesquels :
- les figures 1 à 4 sont des vues de l'avant d'un véhicule automobile et qui illustrent respectivement les phases d'ouvertures d'un ouvrant de porte selon le premier mode de réalisation de l'invention ;
- les figures 5 et 6 illustrent les deux positions d'un dispositif de verrouillage/déverrouillage de cet ouvrant pour le faire passer de la position de la figure 1 à celle de la figure 2 ;
- les figures 7 à 10 illustrent les moyens de manoeuvre de cet ouvrant suivant un premier exemple de réalisation de ce premier mode ;
- la figure 11 illustre les moyens de manoeuvre de l'ouvrant suivant un second exemple de réalisation de ce premier mode ;
- la figure 12 est une vue schématique pour illustrer un détail d'un système d'ouvrant selon l'invention pouvant s'appliquer aux premier ou second modes de l'invention ;
- les figures 13 et 14 sont deux vues schématiques partielles latérales illustrant un système d'ouvrant de porte selon le second mode de réalisation de l'invention, respectivement dans une position fermée et dans une position partiellement ouverte de l'ouvrant ;
- la figure 15 est une vue de détail en perspective montrant la structure des moyens de commande et de manoeuvre de l'ouvrant selon ce second mode dans une position complètement ouverte de celui-ci, et d'un moyen de rappel amortissant le pivotement de cet ouvrant ;
- les figures 16 et 17 sont deux vues en perspective détaillant la structure à deux tringleries identiques jumelées du système d'ouvrant de la figure 15, respectivement dans une position fermée et dans une position d'ouverture intermédiaire ; et
- la figure 18 est une vue en perspective du système d'ouvrant des figures 16 et 17 dans une position finale complètement ouverte de l'ouvrant.

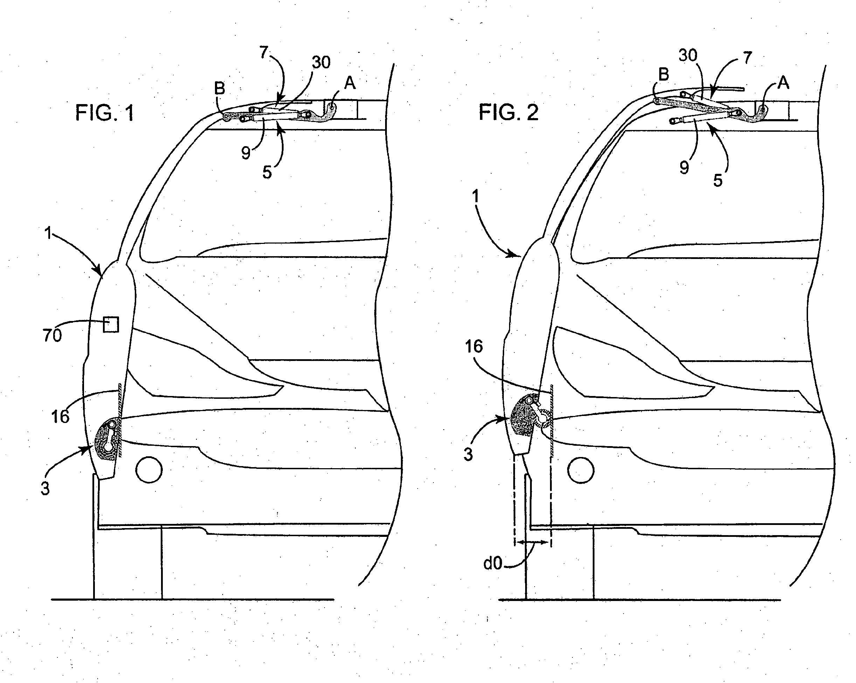

Les figures 1 à 4 illustrent les différentes phases intervenant au cours de l'ouverture d'un ouvrant 1 de type "coulisso-battant" selon le premier mode de l'invention, cet ouvrant 1 étant par exemple celui d'une porte avant d'un véhicule à moteur. Le cadre supérieur de l'ouvrant 1 est monté articulé autour d'un axe de rotation principal fixe A, sensiblement horizontal et supporté par le châssis du véhicule au niveau de son pavillon de toit.

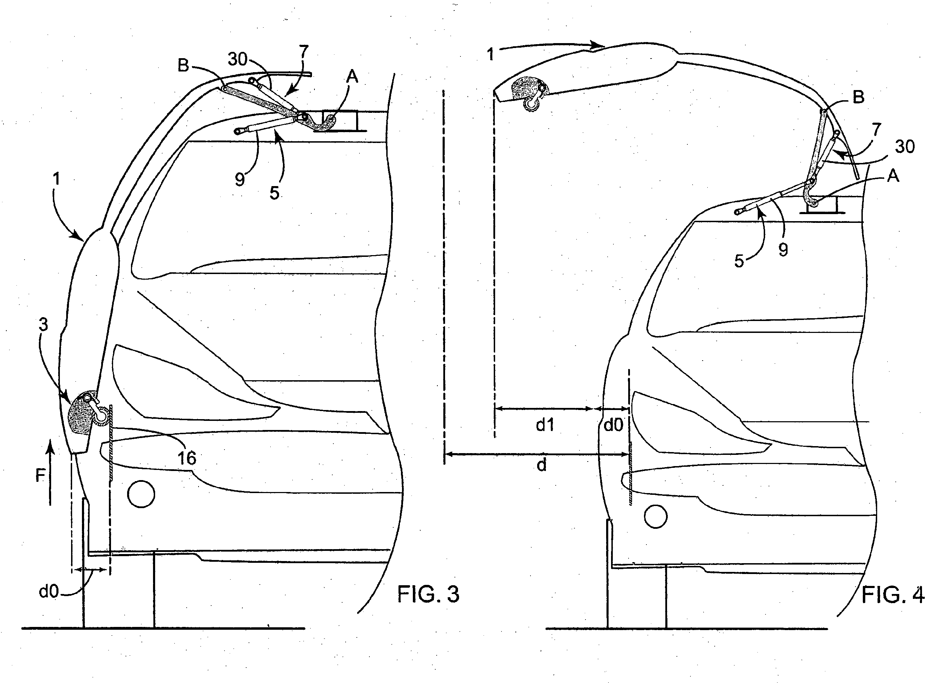

Sur la figure 1, l'ouvrant 1 est représenté dans sa position de fermeture. A l'ouverture de l'ouvrant 1, suite à un actionnement mécanique ou électrique d'un dispositif de verrouillage/déverrouillage 3, qui sera décrit plus loin, l'ouvrant 1 s'est dégagé de ses appuis sur la caisse du véhicule en faisant un déplacement en rotation de faible amplitude vers l'extérieur autour de l'axe de rotation principal A, ce qui se traduit par un débattement latéral faible d'une valeur do, comme cela est illustré à la figure 2. Ensuite, comme illustré à la figure 3, l'ouvrant 1 effectue un déplacement en translation suivant la flèche F dans un plan sensiblement vertical qui idéalement n'occasionne aucun débattement latéral, ce déplacement en translation étant la combinaison d'un déplacement en rotation autour de l'axe de rotation principal A sous l'action de moyens de commande 5 et d'un déplacement en rotation en sens inverse autour d'un axe de rotation secondaire B de moyens de manoeuvre 7 pilotés par les moyens de commande 5 et montés entre l'axe de rotation principal A et l'ouvrant 1. La figure 3 représente l'ouvrant 1 à la fin de son déplacement en translation, le débattement latéral de l'ouvrant 1 ayant été maintenu sensiblement à sa valeur do. Enfin, l'ouvrant 1 effectue un déplacement en rotation autour de l'axe de rotation principal A sans intervention des moyens de manoeuvre 7 par suite d'un blocage de l'axe de rotation secondaire B, ce qui se traduit par un débattement latéral d1, comme cela est illustré à la figure 4 qui représente l'ouvrant 1 dans sa position d'ouverture finale. Bien entendu, ces déplacements de l'ouvrant 1 s'effectuent en principe en sens inverse dans le cas de sa fermeture.

Il est à noter que le débattement latéral de l'ouvrant 1 dans sa position d'ouverture est égal à do+d1, qui est d'une valeur inférieure à celle du débattement d qui serait obtenu par suite d'un seul déplacement en rotation de l'ouvrant 1 autour de l'axe de rotation principal A, comme cela est visible à la figure 4.

D'une manière générale, les différents déplacements de l'ouvrant 1 sont obtenus par des moyens de commande 5 de la rotation de l'ouvrant 1 autour de l'axe de rotation principal A, ces moyens pouvant être constitués par exemple par au moins un vérin 9 dont le montage sera explicité avec la description des moyens de manoeuvre 7.

On va maintenant expliciter en détail les différents déplacements précités de l'ouvrant 1 dans le cas de son ouverture.

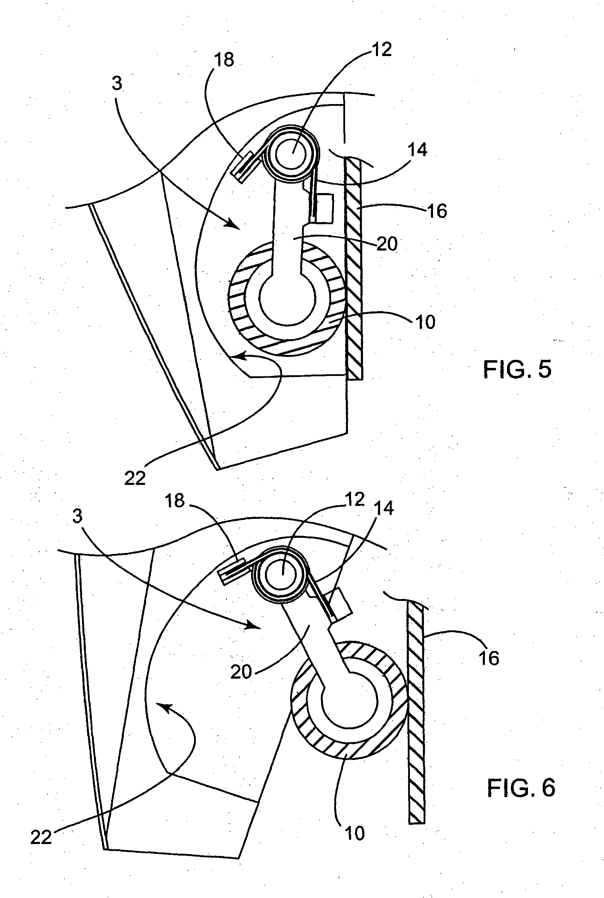

Les figures 5 et 6 illustrent un mode de réalisation du dispositif de verrouillage/déverrouillage 3 qui est actionné au début de la phase d'ouverture de l'ouvrant 1. Le dispositif 3 comprend notamment une roulette escamotable 10 montée pivotante autour d'un axe de rotation 12 qui s'étend parallèlement à l'axe de rotation principal A de l'ouvrant 1. La roulette escamotable 10 est armée par exemple par un ressort de torsion 14 pour prendre soit une position de repos ou escamotée (figure 5) soit une position active (figure 6) occasionnant le dégagement de l'ouvrant 1 par suite d'un déplacement en rotation de faible amplitude de l'ouvrant 1 autour de l'axe de rotation principal A. La roulette escamotable 10 est montée en partie basse de l'ouvrant 1 et coopère avec une rampe de guidage fixe 16, sensiblement verticale, solidaire du châssis du véhicule. Le ressort de torsion 14 est par exemple enroulé sur au moins un tour autour de l'axe de rotation 12 de la roulette 10. Une extrémité du ressort de torsion 14 est ancrée en un point fixe 18 de l'ouvrant 1, alors que son autre extrémité est ancrée sur un bras de support 20 de la roulette 10. Dans sa position escamotée (figure 5), la roulette 10 vient se positionner dans un logement 22 de l'ouvrant 1, le ressort de torsion 14 étant en position armée, et elle se situe vers l'extrémité basse de la rampe de guidage 16. Lorsqu'on actionne le dispositif de verrouillage/déverrouillage 3, le ressort de torsion 14 se libère, ce qui provoque le déplacement en rotation de faible amplitude de l'ouvrant 1 autour de son axe de rotation principal A, alors que la roulette 10 s'est légèrement déplacée sur la rampe 16 tout en restant en contact avec elle.

Pour passer de la position illustrée à la figure 2 à la position illustrée à la figure 3, les moyens de commande 5 précités de l'ouvrant 1 vont actionner les moyens de manoeuvre 7 précités qui sont constitués par une tringlerie déformable 30 qui permet à l'ouvrant 1 de pivoter en sens inverse autour de l'axe de rotation secondaire B précité tout en pivotant autour de l'axe de rotation principal A. La combinaison de ces deux mouvements de rotation entraînent le déplacement de l'ouvrant 1 dans un plan sensiblement vertical à la manière d'une porte coulissante.

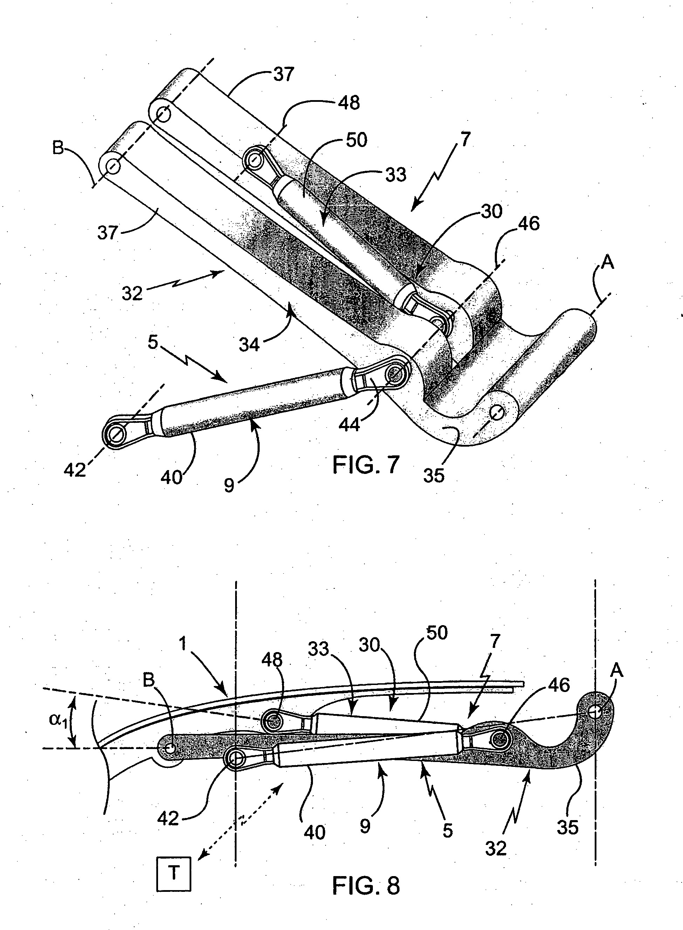

Selon un premier exemple de réalisation du premier mode illustré aux figures 7 à 10, la tringlerie déformable 30 comprend deux pièces 32 et 33. En référence à la figure 7, la première pièce 32 est constituée par une barre de liaison 34, qui peut être en forme de U avec un talon 35 et deux branches latérales 37. Cette barre de liaison 34 est montée pivotante au niveau de son talon 35 autour de l'axe de rotation principal A supporté par le châssis du véhicule, alors que l'extrémité de ses deux branches 37 est montée autour de l'axe de rotation secondaire B supporté par l'ouvrant 1. Le cylindre 40 du vérin 9 des moyens de commande 5 est monté articulé autour d'un axe de rotation 42 supporté par le châssis du véhicule, alors que sa tige 44 est montée articulée autour d'un axe de rotation 46 qui traverse les deux branches latérales 37 de la barre de liaison 34 au voisinage du talon 35, ou inversement. Il est important de noter que les quatre axes de rotation A, B, 42 et 46 sont parallèles entre eux, et que l'axe de rotation 46 du vérin 9 des moyens de commande 5 est situé entre les axes de rotation principal A et secondaire B. De cette manière, la commande du vérin 9 peut entraîner une rotation de l'ouvrant 1 autour de l'axe de rotation principal A. La seconde pièce 33 est constituée par un moyen dit équilibreur 50 qui est un élément télescopique à course limitée, tel un vérin ou un compas à gaz par exemple. Une extrémité du moyen équilibreur 50 est montée articulée en rotation autour de l'axe de rotation 46 commun à la barre de liaison 34 et au vérin de commande 9, alors que son autre extrémité est montée articulée sur l'ouvrant 1 autour d'un axe de rotation 48.

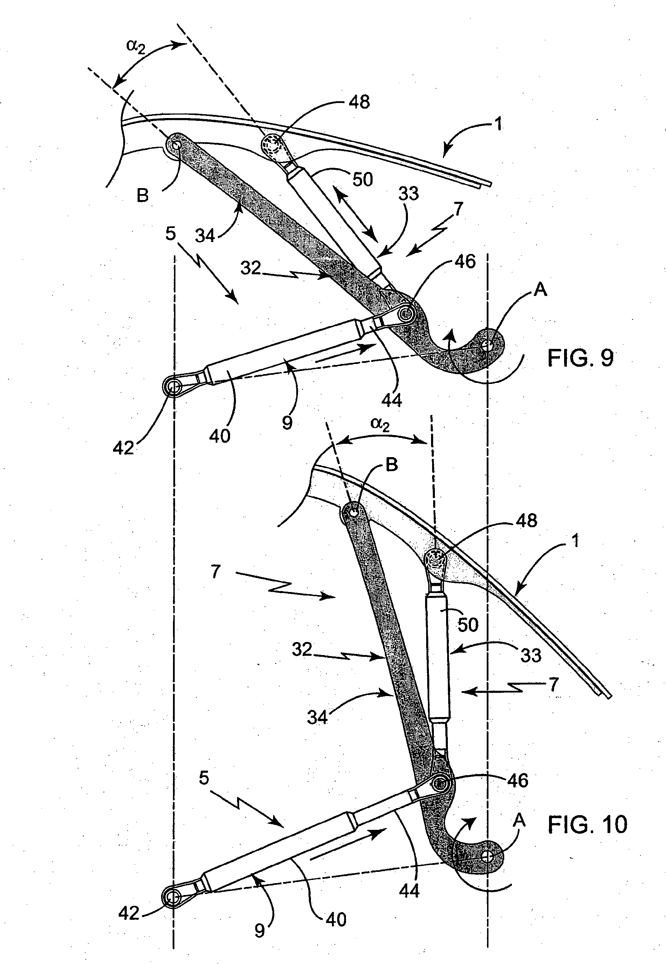

La tringlerie 30 constituée des deux pièces 32 et 33 forment entre elles un angle α. Plus précisément, lorsque l'ouvrant 1 est dans la position illustrée à la figure 2 qui est reprise à la figure 8, l'angle α formé par les deux pièces 32 et 33 est à une valeur minimale α₁, de l'ordre de quelques degrés, c'est-à-dire que les deux pièces 32 et 33 sont presque parallèles entre elles. Lorsque l'ouvrant 1 passe dans la position illustrée à la figure 3 qui est reprise à la figure 9, il pivote autour de l'axe de rotation principal A, mais également autour de l'axe de rotation secondaire B par suite de l'allongement du moyen équilibreur 50, ce qui se traduit par une ouverture de l'angle α à une valeur maximale α₂ entre les deux pièces 32 et 33.

Autrement dit, le débattement angulaire de l'ouvrant 1 provoqué par sa rotation autour de l'axe de rotation principal A est compensé par un déplacement en direction inverse de l'ouvrant 1 sous son propre poids autour de l'axe de rotation secondaire B par suite de l'allongement de l'élément équilibreur 50, si bien que l'ouvrant 1 peut se déplacer en translation dans un plan sensiblement vertical.

Une fois que l'ouvrant 1 a terminé son déplacement dans un plan sensiblement vertical (figure 3), l'élément équilibreur 50 a atteint une longueur fixe, ce qui a pour effet de bloquer la rotation de l'ouvrant autour de l'axe secondaire B, l'angle α a atteint sa valeur maximale et la tringlerie 30 est dans un état bloqué ou indéformable. La fin du déplacement de l'ouvrant entre les positions illustrées aux figures 3 et 4 s'effectue sur la simple commande du vérin 9 des moyens de commande 5, ce qui se traduit par un déplacement en rotation autour de l'axe de rotation principal A qui entraîne le débattement d1 de l'ouvrant 1. La figure 10 reprend la position de la figure 4 lorsque l'ouvrant 1 est complètement ouvert. Bien entendu, les déplacements de l'ouvrant 1 qui viennent d'être décrits pour l'ouverture de l'ouvrant 1 s'effectuent en sens inverse lorsque l'ouvrant 1 est rabaissé vers sa position de fermeture. La commande du vérin 9 peut être assurée par une télécommande à distance T par exemple schématiquement représentée à la figure 8.

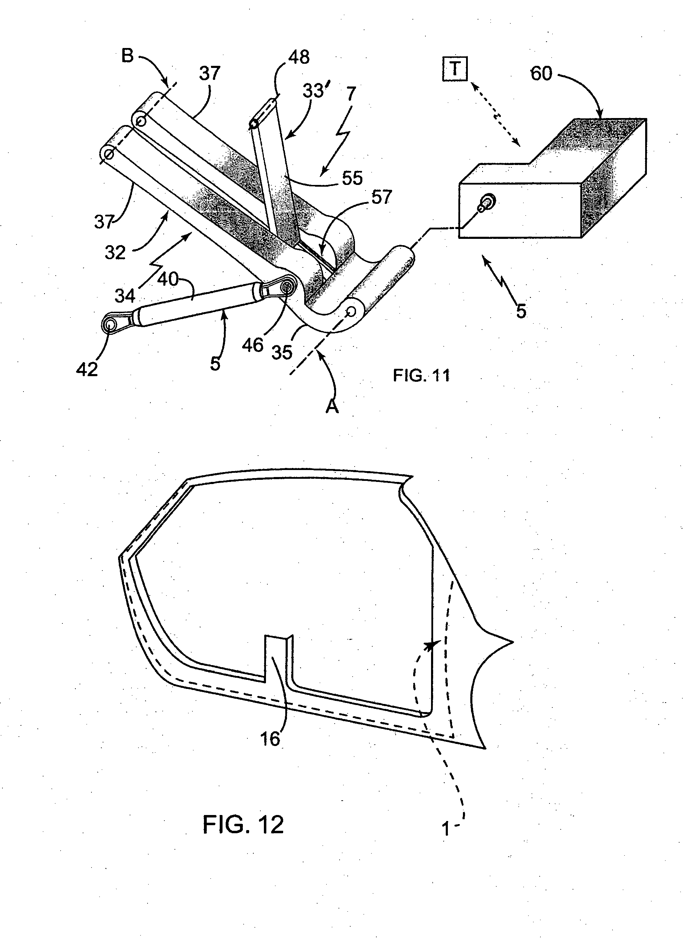

Selon un deuxième exemple de réalisation des moyens de manoeuvre 7 de l'ouvrant 1 selon le premier mode, la seconde pièce 33' formée par le moyen équilibreur 50 peut être remplacée par un coulisseau 55 dont on peut faire varier la longueur en le faisant déplacer dans une rainure 57 ménagée par exemple entre les deux branches latérales 37 de la pièce 32 de la tringlerie 30, comme cela est illustré à la figure 11.

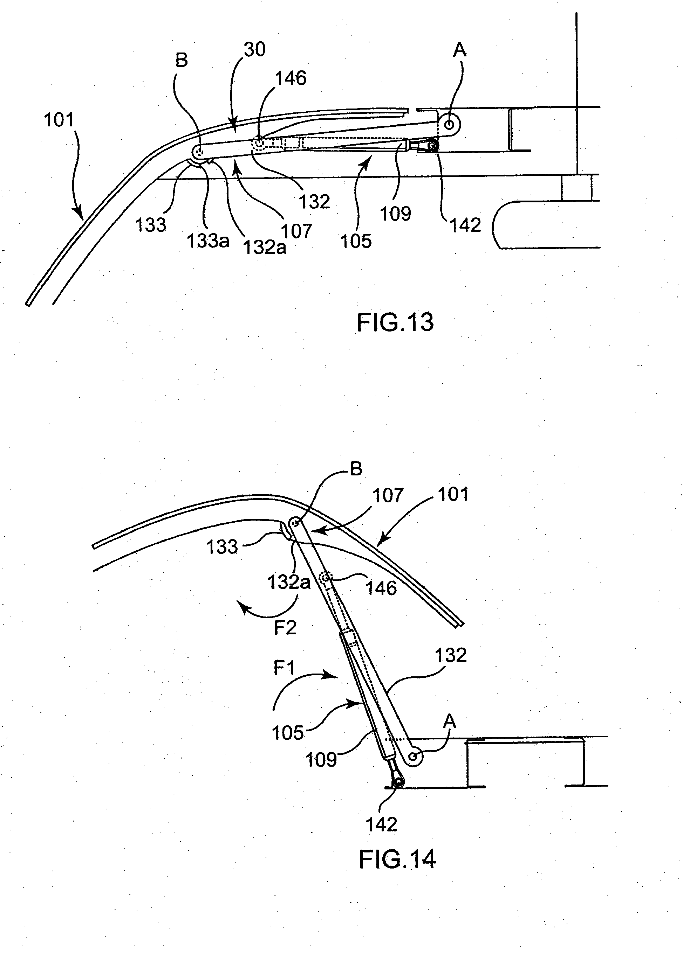

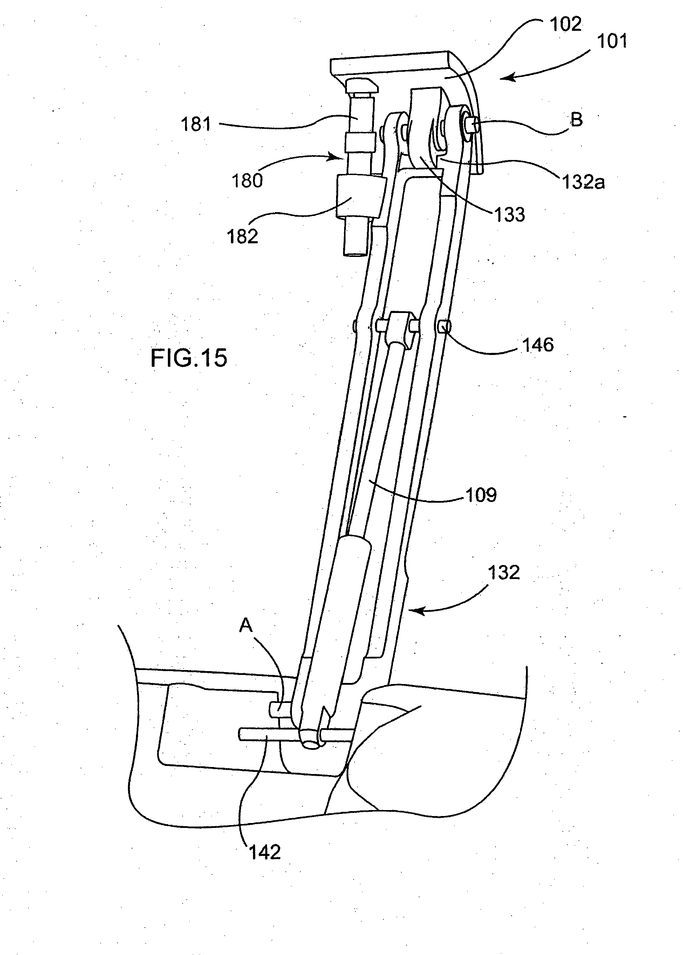

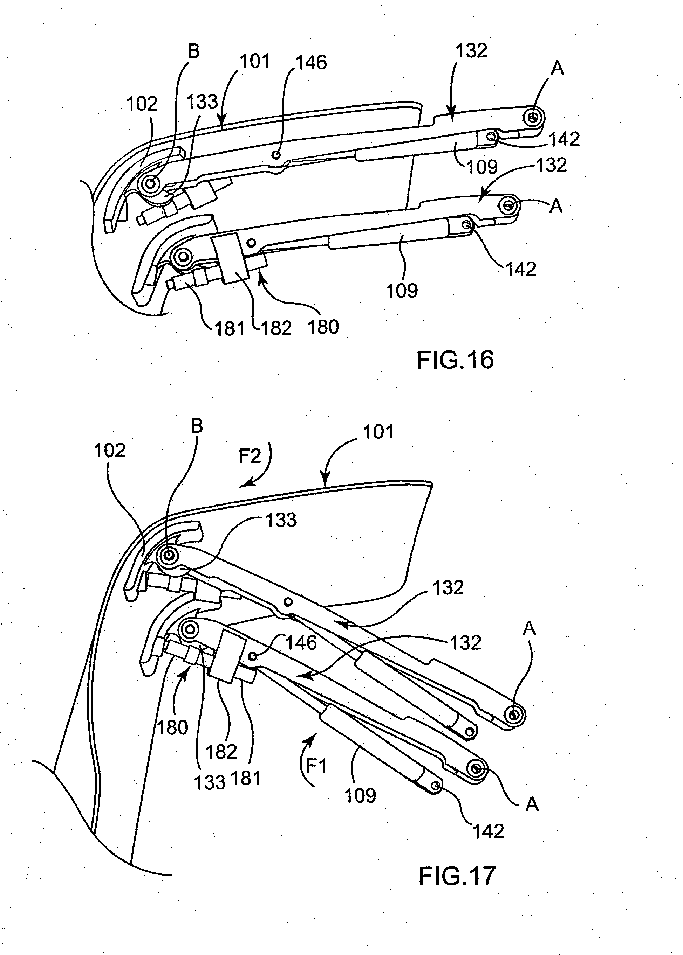

Les figures 13 à 18 illustrent un système d'ouvrant selon le second mode de réalisation de l'invention avec notamment, comme visible à la figure 15 :
- des moyens de commande en rotation 105 de l'ouvrant 101 autour de l'axe de rotation principal A (dans le sens de la flèche F1, voir figures 14 et 17) qui sont constitués d'un vérin par exemple à gaz 109 articulé en son extrémité latéralement interne sur un axe de rotation 142 supporté par le châssis du véhicule (contrairement à l'axe 42 du premier mode précité, cet axe fixe 142 est prévu adjacent à l'axe A en étant dans cet exemple situé juste en dessous de cet axe A et vers l'extérieur de celui-ci dans la direction latérale du véhicule), et
- des moyens de manoeuvre 107 en rotation en sens inverse de l'ouvrant 101 autour de l'axe de rotation secondaire B supporté par l'ouvrant 101 (voir flèche F2 aux figures 14 et 17), moyens 107 qui sont actionnés par le déplacement du vérin 109 via l'articulation de l'autre extrémité de celui-ci sur un axe de rotation 146 supporté par ces moyens de manoeuvre 107 et qui sont constitués d'une tringlerie 30 formée :
   * d'une première pièce 132 ou barre de liaison qui est en forme de biellette articulée en ses extrémités sur les axes A et B et qui porte l'axe 146 du vérin 109 plus près de l'axe B que de l'axe A, et
   * d'une seconde pièce 133 formant une butée angulaire qui est montée fixe sur le cadre 102 de l'ouvrant 101 et contre laquelle est destiné à buter un élément transversal 132a de la première pièce 132 lors de la rotation de cette dernière, de sorte que la combinaison de ces deux mouvements de rotation autour des axes A et B entraîne le déplacement de l'ouvrant 101 dans un plan sensiblement vertical.

Plus précisément, on voit à la figure 15 que la butée angulaire 133 est montée autour de l'axe B en définissant une surface de butée en pivotement 133a avec la biellette 132 qui est située immédiatement en dessous de cet axe B (voir notamment les figures 13 et 14 pour ce positionnement relatif de la surface de butée 133a).

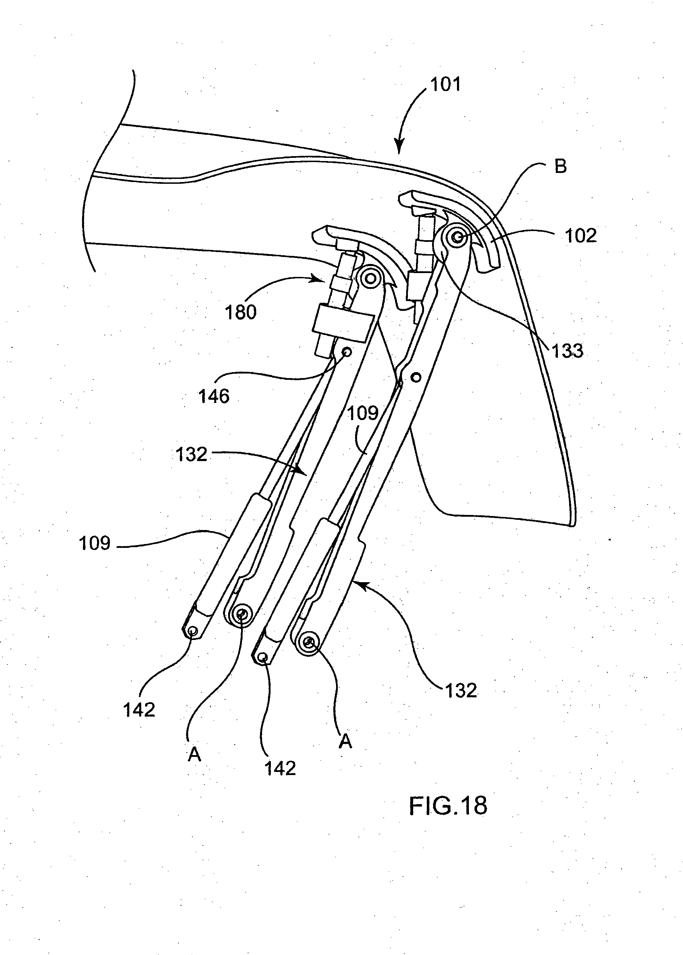

En outre et comme visible aux figures 15 à 18, le système d'ouvrant selon ce second mode de l'invention peut avantageusement comprendre des moyens de rappel ou d'amortissement 180 constitués par exemple d'un amortisseur hydraulique solidaire de la biellette 132 et coopérant avec le cadre 102 de l'ouvrant 101 de sorte à amortir le pivotement de cette biellette 132 contre la butée 133. Dans cet exemple de réalisation, cet amortisseur 180 comporte une tige 181 qui est montée mobile en translation à l'intérieur d'un support fileté 182 solidaire de la biellette 132 à proximité de l'axe B et dont l'extrémité libre vient au contact du cadre 102 de l'ouvrant 101 lorsque ce dernier n'occupe pas la position de fermeture de la figure 16 (i.e. en position d'ouverture partielle ou totale, voir figures 17 et 18).

On va à présent décrire le fonctionnement de ce système d'ouvrant lors de son ouverture, en partant de la position fermée de la figure 16 où le vérin à gaz 109 est comprimé, ce qui ne génère aucune rotation de la biellette 132 autour des axes A et B. On voit à cette figure 16 que l'amortisseur 180 n'est pas en contact avec l'ouvrant 101 et est ainsi inactif.

Pour l'obtention de la position d'ouverture intermédiaire de la figure 17, on voit que la biellette 132 a pivoté autour de l'axe principal A sous l'effet de la détente du vérin à gaz 109 générant une augmentation de sa course, avec une rotation en sens inverse de son extrémité adjacente à l'axe secondaire B qui vient buter contre la butée angulaire 132 de l'ouvrant 101. De plus, ce pivotement de l'ouvrant 101 au niveau de l'axe B en l'extrémité correspondante de la biellette 132 est amorti par l'amortisseur 180 jusqu'à ce que l'élément transversal 132a de cette biellette 132 atteigne la surface 133a de la butée 133.

Et à l'instar du premier mode de réalisation décrit ci-dessus, c'est cette combinaison de deux rotations dans les directions opposées F1 et F2 qui permet de générer, dans une étape initiale d'ouverture de l'ouvrant 101, un déplacement de celui-ci dans un plan quasiment vertical, i.e. sans occasionner de débattement latéral de l'ouvrant 101 pendant cette ouverture initiale.

Et une fois la butée angulaire 133 atteinte, l'ensemble biellette 132 et ouvrant 101 pivote autour de l'axe principal A avec un blocage de l'axe B contre cette butée 133 pendant la suite de l'ouverture de l'ouvrant 101 avec, dans la position d'ouverture complète de la figure 18, une course maximale du vérin à gaz 109.

Dans les modes de réalisation qui viennent d'être décrits, les moyens de commande 5 pour l'ouverture et la fermeture de l'ouvrant 1 sont actionnés par la commande du vérin 9 ou de tout autre moyen de commande analogue dont la longueur varie, mais le vérin 9 peut être aussi actionné manuellement en agissant sur une poignée extérieure de l'ouvrant 1. En variante, on peut également prévoir des moyens de commande 5 qui entraîne en rotation l'axe de commande principal A. A cet effet, comme cela est symbolisé à la figure 11, un groupe moteur 60 peut être utilisé pour commander la rotation de l'axe de rotation principal A qui est alors solidaire de la pièce 32 de la tringlerie pour l'entraîner en rotation. Dans ce cas, le vérin 9 des moyens de commande est piloté par la rotation de la pièce 32 de la tringlerie 30. La commande du groupe moteur 60 peut être actionnée par une télécommande à distance T par exemple.

D'une manière générale, dans un véhicule automobile qui est équipé de quatre portes battantes par exemple, il est nécessaire d'avoir un montant intermédiaire ou "pied milieu" qui a notamment pour fonction de supporter une partie des systèmes d'ouverture et de fermeture des battants. Par ailleurs, ce pied milieu est situé en retrait par rapport au volume général du véhicule.

Selon l'invention, comme cela est schématiquement illustré à la figure 12, la rampe de guidage 16 qui sert de piste de roulement pour la roulette escamotable 10 lorsque l'ouvrant 1 se déplace dans un plan sensiblement vertical au début de son mouvement d'ouverture, forme également un pied milieu qui ne s'étend pas sur toute la hauteur du cadre de porte.

Par ailleurs, le système de commande 5 de l'ouvrant est situé au niveau du cadre supérieur de l'ouvrant 1 et son articulation autour de l'axe de rotation principal A empiète sur le pavillon de toit, si bien qu'il est possible d'extérioriser la rampe de guidage 16 qui ne pénètre plus à l'intérieur du volume habitacle du véhicule.

A titre d'exemple, l'ouvrant 1 peut être équipé de capteurs de proximité 70 (figure 1) du type à ultra-sons qui peuvent interdire l'ouverture ou la fermeture de l'ouvrant en présence d'une personne située au voisinage de l'ouvrant 1. L'ouvrant 1 peut être également équipé d'un système sonore qui prévient de l'ouverture ou de la fermeture de l'ouvrant. Enfin, l'ouvrant 1 peut être équipé de capteurs anti-pincement qui arrêtent le processus d'ouverture ou de fermeture en présence d'un corps étranger, tel une main par exemple qui pourrait être coincée lors de la fermeture de l'ouvrant 1 par exemple.

## Revendications

1. Système d'ouvrant pour un engin à moteur, en particulier pour un véhicule automobile par exemple, l'ouvrant (1, 101) étant monté articulé autour d'un axe de rotation principal fixe (A), sensiblement horizontal et supporté par le châssis de l'engin à moteur, et étant déplaçable autour de l'axe de rotation principal (A) manuellement ou automatiquement entre une position fermée et une position ouverte par des moyens de commande (5, 105) inclus dans ce système, **caractérisé en ce que**, au cours d'une phase de déplacement de l'ouvrant (1), les moyens de commande en rotation (5, 105) de l'ouvrant (1, 101) autour de l'axe de rotation principal (A) actionnent des moyens de manoeuvre (7, 107) en rotation en sens inverse de l'ouvrant (1, 101) autour d'un axe de rotation secondaire (B), ces moyens de manoeuvre étant également inclus dans ce système, la combinaison de ces deux déplacements en rotation entraînant un déplacement de l'ouvrant (1, 101) dans un plan sensiblement vertical sans nécessairement occasionner un débattement latéral de l'ouvrant pendant cette phase de déplacement de l'ouvrant (1, 101).

2. Système d'ouvrant selon la revendication 1, dans lequel les moyens de manoeuvre (7, 107) de l'ouvrant (1, 101) comprennent une tringlerie articulée (30, 130) dont la géométrie se déforme pendant la phase de déplacement de l'ouvrant (1, 101) dans un plan sensiblement vertical, et dont la géométrie reste fixe pendant le reste du déplacement de l'ouvrant (1, 101) en interdisant la rotation de l'ouvrant (1, 101) autour de l'axe de rotation secondaire (B).

3. Système d'ouvrant selon la revendication 2, dans lequel la tringlerie articulée (30) comprend au moins une pièce (33, 33') dont la longueur varie au cours de la phase de déplacement de l'ouvrant (1) dans un plan sensiblement vertical.

4. Système d'ouvrant selon la revendication 2, dans lequel la tringlerie articulée (30, 130) est constituée de deux pièces (32 et 33 ou 33', 132 et 133) formant entre elles un angle α qui est variable pendant la phase de déplacement de l'ouvrant (1, 101) dans un plan sensiblement vertical et qui est fixe pendant le reste du déplacement de l'ouvrant (1, 101).

5. Système d'ouvrant selon la revendication 4, dans lequel la première pièce (32, 132) de la tringlerie articulée (30, 130) est montée en rotation autour de l'axe de rotation principal (A) supporté par le châssis du véhicule et autour de l'axe de rotation secondaire (B) supporté par l'ouvrant (1, 101), et dans lequel les moyens de commande en rotation (5) qui comprennent au moins un vérin (9, 109) sont montés articulés autour d'un autre axe de rotation (42, 142) supporté par le châssis du véhicule et autour d'un axe de rotation (46, 146) qui est supporté par la première pièce (32, 132) de la tringlerie (30, 130) et qui est situé entre les axes de rotation principal (A) et secondaire (B).

6. Système d'ouvrant selon la revendication 5, dans lequel la seconde pièce (33) de la tringlerie articulée (30) est constituée par un moyen équilibreur (50) à la longueur variable qui est monté articulé entre un axe de rotation (48) supporté par l'ouvrant (1) et ledit axe de rotation (46) supporté par la première pièce (32) de la tringlerie (30).

7. Système d'ouvrant selon la revendication 5, dans lequel la seconde pièce (33') de la tringlerie articulée (30) est constituée par un coulisseau (55) qui est mobile dans une rainure (57) de la première pièce (32) de la tringlerie pour faire varier la longueur de ce coulisseau et donc la position d'un axe de rotation (48) supporté par l'ouvrant (1), sur lequel axe le coulisseau est monté articulé.

8. Système d'ouvrant selon la revendication 5, dans lequel la première pièce (132) de la tringlerie articulée (130) comporte un élément (150) conçu pour venir buter, lors de la rotation de cette première pièce (132) autour de l'axe de rotation secondaire (B), contre une butée angulaire (133) qui est solidaire de l'ouvrant (101) et forme la seconde pièce (133) de cette tringlerie (130), et de préférence dans lequel cette butée angulaire (133) est montée fixe par rapport à l'ouvrant et de manière immédiatement adjacente à l'axe de rotation secondaire (B).

9. Système d'ouvrant selon la revendication 8, dans lequel ce système comprend, outre les moyens de commande (105) et les moyens de manoeuvre (107), des moyens d'amortissement (180) de la rotation de la première pièce (132) autour de l'axe de rotation secondaire (B), ces moyens d'amortissement, tels qu'un amortisseur à vérin hydraulique, étant montés solidaires de cette première pièce (132) et coopérant avec l'ouvrant (101) lors de son ouverture.

10. Système d'ouvrant selon l'une des revendications 5 à 9, dans lequel ledit vérin (9, 109) constituant les moyens de commande en rotation de l'ouvrant (1, 101) est commandé d'une manière automatique par une télécommande à distance (T) par exemple pour entraîner la rotation de l'ouvrant (1, 101) autour de l'axe de rotation principal (A), ou bien dans lequel l'axe de rotation principal (A) est commandé en rotation par un groupe moteur (60) pour entraîner la rotation de l'ouvrant (1, 101) autour de l'axe de rotation principal (A) et pour entraîner l'actionnement dudit vérin (9, 109) associé aux moyens de commande en rotation (5, 105).

11. Système d'ouvrant selon l'une des revendications précédentes, dans lequel un dispositif de verrouillage/déverrouillage (3) assure le dégagement de l'ouvrant (1) de ses appuis sur la caisse du véhicule au début de son mouvement d'ouverture.

12. Système d'ouvrant selon la revendication 11, dans lequel le dispositif de verrouillage/déverrouillage (3) comprend une roulette escamotable (10) qui roule sur un rail de guidage (16) au cours du déplacement de l'ouvrant (1) dans un plan sensiblement vertical, de préférence dans lequel le rail de guidage forme un pied milieu limité à la hauteur de ce rail de guidage, et de préférence dans lequel le rail de guidage est extériorisé par rapport à la caisse du véhicule.

13. Système d'ouvrant selon l'une des revendications précédentes, dans lequel les moyens de commande (5, 105) de l'ouvrant (1, 101) sont montés au niveau du cadre supérieur de l'ouvrant (1, 101) en étant déportés sur le pavillon de toit.

14. Système d'ouvrant selon l'une des revendications précédentes, dans lequel sont prévus des moyens de sécurité (70) pour éviter tout accident au cours de l'ouverture ou de la fermeture de l'ouvrant (1).

15. Engin à moteur comprenant au moins un ouvrant (1), **caractérisé en ce que** l'ouvrant (1) est ouvert ou fermé par un système d'ouvrant tel que défini par l'une des revendications précédentes.

## Patentansprüche

1. Lukensystem für ein motorisiertes Gerät, insbesondere für beispielsweise ein Kraftfahrzeug, wobei die Luke (1, 101) schwenkbar um eine feste Hauptrotationsachse (A) angebracht ist, welche im Wesentlichen horizontal ist und von dem Gestell des motorisierten Geräts getragen ist und um die Hauptrotationsachse (A) durch in diesem System enthaltene Steuermittel (5, 105) manuell oder automatisch zwischen einer geschlossenen Position und einer offenen Position bewegbar ist, **dadurch gekennzeichnet, dass** im Verlauf einer Bewegungsphase der Luke (1) die Steuermittel für Rotation (5, 105) der Luke (1, 101) um die Hauptrotationsachse (A) Betätigungsmittel (7, 107) für eine Rotation der Luke (1, 101) in umgekehrter Richtung um eine sekundäre Rotationsachse (B) betätigen, wobei diese Betätigungsmittel ebenfalls in diesem System enthalten sind, wobei die Kombination dieser zwei Rotationsbewegungen eine Bewegung der Luke (1, 101) in einer im Wesentlichen vertikalen Ebene herbeiführt, ohne notwendigerweise eine seitliche Auslenkung der Luke während dieser Bewegungsphase der Luke (1, 101) zu bewirken.

2. Lukensystem nach Anspruch 1, wobei die Betätigungsmittel (7, 107) der Luke (1, 101) ein Gelenkgestänge (30, 130) umfassen, dessen Geometrie sich während der Bewegungsphase der Luke (1, 101) in einer im Wesentlichen vertikalen Ebene verformt, und dessen Geometrie während des Rests der Bewegung der Luke (1, 101) fest ist, wodurch es die Rotation der Luke (1, 101) um die sekundäre Rotationsachse (W) verhindert.

3. Lukensystem nach Anspruch 2, wobei das Gelenkgestänge (30) wenigstens ein Teil (33, 33') umfasst, dessen Länge im Verlauf der Bewegungsphase der Luke (1) in einer im Wesentlichen vertikalen Ebene variiert.

4. Lukensystem nach Anspruch 2, wobei das Gelenkgestänge (30, 130) gebildet ist durch zwei Teile (32 und 33 oder 33', 132 und 133), welche untereinander einen Winkel α bilden, welcher während der Bewegungsphase der Luke (1, 101) in einer im Wesentlichen vertikalen Ebene variabel ist und welcher während des Rests der Bewegung der Luke (1, 101) fest ist.

5. Lukensystem nach Anspruch 4, wobei das erste Teil (32, 132) des Gelenkgestänges (30, 130) zur Rotation um die von dem Gestell des Fahrzeugs getragene Hauptrotationsachse (A) und um die von der Luke (1, 101) getragene sekundäre Rotationsachse (B) angebracht ist, und wobei die Rotationssteuermittel (5), welche wenigstens einen Stellantrieb (9, 109) umfassen, schwenkbar angebracht ist um eine weitere Rotationsachse (42, 142), welche von dem Gestell des Fahrzeugs getragen ist, und um eine Rotationsachse (46, 146), welche von dem ersten Teil (32, 132) des Gelenkgestänges (30, 130) getragen ist und welche sich zwischen der Hauptrotationsachse (A) und der sekundären Rotationsachse (B) befindet.

6. Lukensystem nach Anspruch 5, wobei das zweite Teil (33) des Gelenkgestänges (30) gebildet ist durch ein Ausgleichmittel (50) mit variabler Länge, welches schwenkbar angebracht ist zwischen einer von der Luke (1) getragenen Rotationsachse (48) und der von dem ersten Teil (32) des Gestänges (30) getragenen Rotationsachse (46).

7. Lukensystem nach Anspruch 5, wobei das zweite Teil (33') des Gelenkgestänges (30) gebildet ist durch einen Gleitstein (55), welcher in einer Rille (57) des ersten Teils (32) des Gestänges beweglich ist, um die Länge dieses Gleitsteins und somit die Position einer von der Luke (1) getragenen Rotationsachse (48) variieren zu lassen, an welcher Achse der Gleitstein schwenkbar angebracht ist.

8. Lukensystem nach Anspruch 5, wobei das erste Teil (132) des Gelenkgestänges (130) ein Element (150) umfasst, welches dazu ausgestaltet ist, bei der Rotation dieses ersten Teils (132) um die sekundäre Rotationsachse (B) gegen einen Winkelanschlag (133) in Anschlag zu kommen, welcher an der Luke (101) befestigt ist und das zweite Teil (133) dieses Gestänges (130) bildet, und wobei bevorzugt dieser Winkelanschlag (133) fest bezüglich der Luke und auf unmittelbar benachbarte Weise zu der sekundären Rotationsachse (B) angebracht ist.

9. Lukensystem nach Anspruch 8, wobei dieses System, außer den Steuermitteln (105) und den Bestätigungsmitteln (107), Mittel zur Dämpfung (180) der Rotation des ersten Teils (132) um die sekundäre Rotationsachse (B) umfasst, wobei diese Mittel zur Dämpfung, wie z.B. ein Hydraulikzylinderdämpfer, fest an diesem ersten Teil (132) angebracht sind und mit der Luke (101) bei ihrem Öffnen zusammenwirken.

10. Lukensystem nach einem der Ansprüche 5-9, wobei der die Mittel zur Rotationssteuerung der Luke (1, 101) bildende Stellantrieb (9, 109) auf automatische Weise durch beispielsweise eine Fernbedienung (T) gesteuert ist, um die Rotation der Luke (1, 101) um die Hauptrotationsachse (A) herbeizuführen, oder aber wobei die Hauptrotationsachse (A) zur Rotation angesteuert wird durch eine Motorgruppe (60), um die Rotation der Luke (1, 101) um die Hauptrotationsachse (A) herbeizuführen und um die Betätigung des mit den Rotationssteuermitteln (5, 105) verbundenen Stellantriebs (9, 109) herbeizuführen.

11. Lukensystem nach einem der vorhergehenden Ansprüche, wobei eine Verriegelungs-/Entriegelungsvorrichtung (3) das Lösen der Luke (1) von ihren Auflagern an der Karosserie des Fahrzeugs am Anfang ihrer Öffnungsbewegung sicherstellt.

12. Lukensystem nach Anspruch 11, wobei die Verriegelungs-/Entriegelungsvorrichtung (3) eine versenkbare Rolle (10) umfasst, welche im Verlauf der Bewegung der Luke (1) in einer im Wesentlichen vertikalen Ebene an einer Führungsschiene (16) rollt, wobei bevorzugt die Führungsschiene eine Mittelsäule bildet, welche auf die Höhe dieser Führungsschiene begrenzt ist, und wobei bevorzugt die Führungsschiene bezüglich der Karosserie des Fahrzeugs nach außen gekehrt ist.

13. Lukensystem nach einem der vorhergehenden Ansprüche, wobei die Steuermittel (5, 105) der Luke (1, 101) auf Höhe des oberen Rahmens der Luke (1, 101) angebracht sind und an das Karosseriedach verlagert sind.

14. Lukensystem nach einem der vorhergehenden Ansprüche, wobei Sicherheitsmittel (70) vorgesehen sind, um jeglichen Unfall im Verlauf des Öffnens oder Schließens der Luke (1) zu vermeiden.

15. Motorisiertes Gerät, umfassend wenigstens eine Luke (1), **dadurch gekennzeichnet, dass** die Luke (1) durch ein Lukensystem geöffnet oder geschlossen wird, wie es durch einen der vorhergehenden Ansprüche definiert ist.

## Claims

1. Hatch system for a motor craft, in particular for an automobile vehicle, for example, the hatch (1, 101) being mounted articulated about a substantially horizontal fixed main rotation axis (A) supported by the chassis of the motor craft, and being movable about the main rotation axis (A) manually or automatically between a closed position and an open position by drive means (5, 105) included in this system, **characterized in that**, during a phase of movement of the hatch (1), the drive means (5, 105) driving rotation of the hatch (1, 101) about the main rotation axis (A) actuate maneuvering means (7, 107) for maneuvering the hatch (1, 101) in rotation in the opposite direction about a secondary rotation axis (B), these maneuvering means being also included in this system, the combination of these two movements in rotation causing the hatch (1, 101) to move in a substantially vertical plane without necessarily causing lateral movement of the hatch during this phase of movement of the hatch (1, 101).

2. Hatch system according to Claim 1, wherein the maneuvering means (7, 107) for maneuvering the hatch (1, 101) comprise an articulated linkage (30, 130), the geometry of which is deformed during the phase of movement of the hatch (1, 101) in a substantially vertical plane and remains fixed during the rest of the movement of the hatch (1, 101), preventing rotation of the hatch (1, 101) about the secondary rotation axis (B).

3. Hatch system according to Claim 2, wherein the articulated linkage (30) comprises at least one part (33, 33') the length of which varies during the phase of movement of the hatch (1) in a substantially vertical plane.

4. Hatch system according to Claim 2, wherein the articulated linkage (30, 130) is constituted of two parts (32 and 33 or 33', 132 and 133) forming between them an angle a that varies during the phase of movement of the hatch (1, 101) in a substantially vertical plane and that is fixed during the rest of the movement of the hatch (1, 101).

5. Hatch system according to Claim 4, wherein the first part (32, 132) of the articulated linkage (30, 130) is mounted to rotate about the main rotation axis (A) supported by the chassis of the vehicle and about the secondary rotation axis (B) supported by the hatch (1, 101), and wherein the rotation drive means (5) that comprise at least one actuator (9, 109) are mounted articulated about another rotation axis (42, 142) supported by the chassis of the vehicle and about a rotation axis (46, 146) that is supported by the first part (32, 132) of the linkage (30, 130) and that is situated between the main rotation axis (A) and the secondary rotation axis (B).

6. Hatch system according to Claim 5, wherein the second part (33) of the articulated linkage (30) is constituted by variable length balancing means (50) mounted articulated between a rotation axis (48) supported by the hatch (1) and said rotation axis (46) supported by the first part (32) of the linkage (30).

7. Hatch system according to Claim 5, wherein the second part (33') of the articulated linkage (30) is constituted by a slider (55) that is mobile in a groove (57) of the first part (32) of the linkage to vary the length of this slider and thus the position of a rotation axis (48) supported by the hatch (1), on which axis the slider is mounted articulated.

8. Hatch system according to Claim 5, wherein the first part (132) of the articulated linkage (130) includes an element (150) configured to abut against an angular abutment (133) that is rigidly fastened to the hatch (101) and forms the second part (133) of this linkage (130), during the rotation of this first part (132) about the secondary rotation axis (B), and preferably wherein this angular abutment (133) is mounted on and fixed relative to the hatch and immediately adjacent the secondary rotation axis (B).

9. Hatch system according to Claim 8, wherein this system comprises, in addition to the drive means (105) and the maneuvering means (107), damping means (180) for damping the rotation of the first part (132) about the secondary rotation axis (B), these damping means, such as a hydraulic damper, being mounted on and fixedly fastened to this first part (132) and cooperating with the hatch (101) when it is opened.

10. Hatch system according to any one of Claims 5 to 9, wherein said actuator (9, 109) constituting the drive means for driving rotation of the hatch (1, 101) is driven automatically by a remote controller (T) for example to drive the rotation of the hatch (1, 101) about the main rotation axis (A), or else wherein the main rotation axis (A) is driven in rotation by a drive unit (60) to drive the rotation of the hatch (1, 101) about the main rotation axis (A) and to actuate said actuator (9, 109) associated with the rotation drive means (5, 105).

11. Hatch system according to any one of the preceding claims, wherein a locking/unlocking device (3) disengages the hatch (1) from its bearing points on the bodywork of the vehicle at the beginning of its opening movement.

12. Hatch system according to Claim 11, wherein the locking/unlocking device (3) comprises a retractable roller (10) that rolls on a guide rail (16) during the movement of the hatch (1) in a substantially vertical plane, preferably wherein the guide rail forms a B pillar limited to the height of this guide rail, and preferably wherein the guide rail is externalized relative to the bodywork of the vehicle.

13. Hatch system according to any one of the preceding claims, wherein the drive means (5, 105) of the hatch (1, 101) are mounted at the level of the upper frame of the hatch (1, 101) and are outset on the roof.

14. Hatch system according to any one of the preceding claims, wherein safety means (70) are provided to prevent accidents during opening or closing of the hatch (1).

15. Motor craft comprising at least one hatch (1), **characterized in that** the hatch (1) is opened or closed by a hatch system as defined by any one of the preceding claims.
